(19) Europäisches Patentamt
European Patent Office
Office européen des brevets

(11) Publication number: 0 268 416 A2

# (12) EUROPEAN PATENT APPLICATION

(21) Application number: 87309955.0

(51) Int. Cl.4: B29C 67/22

(22) Date of filing: 11.11.87

(30) Priority: 15.11.86 GB 8627342

(43) Date of publication of application:
25.05.88 Bulletin 88/21

(84) Designated Contracting States:
BE DE ES FR GB IT NL SE

(71) Applicant: Dow Corning Limited
Inveresk House 1 Aldwych
London WC2R 0HF(GB)

(72) Inventor: Jones, Gareth Matthew
2 Powys Road Penarth
South Glamorgan Wales(GB)

(74) Representative: Bullows, Michael et al
Dow Corning Limited Cardiff Road
Barry South Glamorgan CF6 7YL Wales(GB)

## (54) Method of providing a foamed mass in a cavity.

(57) The specification describes and claims a method in which a bag of flexible material is introduced to a cavity in, for example, a vehicle body and introducing to the bag a liquid curable foam forming composition, for example a room temperature vulcanisable silicone foam composition.

The bag is impervious to the liquid composition and has outlet openings which are reached by the composition as it foams. The bag is urged into conformity with the cavity by the foaming composition and foaming material passing through the outlet openings assists in holding the assembly of bag and foam in position.

EP 0 268 416 A2

Xerox Copy Centre

# METHOD OF PROVIDING A FOAMED MASS IN A CAVITY

This invention is concerned with a method of providing a foamed mass in a cavity.

In the manufacture of products including a hollow section, for example of metal, it is sometimes desired to include within the hollow section a material intended to contribute sound deadening, flame retardance or other properties. The shape, size and disposition of those cavities within the hollow section into which the material is to be placed may render the use of blocks e.g. of preformed foam inappropriate. In those cases where it is desired to fill a cavity having a complex shape or one of non-uniform cross section for example in a vehicle body on a production line basis it is likely to be appropriate to introduce to the cavity a liquid material which flows to the desired shape and then hardens or cures to provide a suitable filling. In those cases where light weight or sound deadening properties are desired, it is appropriate to employ a material which also foams when introduced to the cavity. For the avoidance of corrosion of metal sections it is desirable to employ as the material a product which does not encourage corrosion of metal sections, or other degradation of items within the section, for example wires or sheathed cables, and equally it is desirable to employ as the material a product which is not adversely affected by other materials present within the hollow section for example waxes, drawing oils, wires and sheaths of cables. These and other requirements have restricted the choice of materials which may be employed.

Liquid, foam forming, curable compositions based on silicone materials are available which flow, foam and vulcanise readily at room or slightly elevated temperature to provide a cured product which is light in weight, and has sound absorbing and heat resistant properties and may also have flame retardant properties. Known compositions generally require several minutes to cure to a self-supporting condition. When these compositions are used within hollow metal sections and in contact therewith, the cure may be inhibited due, for example, to the influence of materials present within the section upon catalysts used in the composition and so the cure within hollow metal sections may require a significant period of time. Attempts to use such compositions for filling hollow sections which have significant openings at their lower ends are thus frustrated by flow of composition from the opening before the composition becomes sufficiently cured to be self-supporting. Whilst it is possible to dam the flow in some cases, this is not always conveniently achieved, and also does not remove difficulties associated with inhibition of the cure.

In our G.B. patent application 8619747 there is described and claimed a method of providing a foamed mass within a cavity in a section of a vehicle body comprising the steps of introducing to the cavity a bag of flexible material and introducing into the bag a liquid, foam forming, curable silicone composition capable of curing to a foamed elastomeric mass at ambient temperatures, the bag and composition being so chosen that the bag is urged into conformity with the shape of the cavity by the composition as it foams.

Methods as described in said patent application are highly acceptable in many respects and particularly in minimising wastage of composition when filling heightwise extending hollow sections. However, compositions proposed for carrying out the method may shrink slightly after curing and so the element comprising the bag and the cured foam may relax into its initial tight fit in the section and thereafter exhibit a weak outward pressure on walls of the cavity. This poses no additional difficulties if the element is suitably located e.g. in a cavity which tapers inwardly below the bag, but if the cavity tapers outwardly or is otherwise enlarged just below the bag there is a risk the element may become dislodged from its desired position in the cavity with consequent loss of advantages arising from presence of the foam in its intended position. When the element is intended to contribute sound deadening characteristics, it is desirable that the element be in close conformity with the inner surface of the cavity. A further difficulty which may arise, for example if a thicker bag is employed or if a cavity of complex configuration including for example very narrow crevices is to be filled, is that the bag occasionally may not be fully opened into precise and full conformity with the contours of the cavity due to the inability of the foaming composition to exert adequate outward pressure as it foams.

We have now found that the method described in said patent application may be further improved by use of a bag having outlet openings or perforations located at a level which is reached by the foamable composition only after the curing and foaming reactions have commenced.

The present invention provides in one of its aspects a method of providing a foamed mass within a cavity in a hollow section comprising the steps of introducing to the cavity a bag of flexible material and introducing into the bag a liquid, curable, foam forming composition, the bag being of a flexible material and having at least a portion which is at least substantially impervious to the liquid foam forming composition and outlet openings which are reached by foam forming composition introduced to the impervious portion of the bag as the composition foams so that the foaming composition may penetrate the outlet openings prior to completion of curing of the composition.

In a method according to the present invention the bag serves to provide a membrane in the cavity to limit flow of the liquid composition, to provide a container for the composition as the conversion to its cured condition proceeds, to provide a barrier between the foamable composition and any cure inhibiting substances that may be present in the cavity, at least until after the cure has commenced, and to provide a membrane or sheath for the cured foam. As curing proceeds and the foam rises in the bag, some curing polymer oozes through the perforations. This material spreads to conform to the shape of the cavity so that when cured, this polymer provides an additional cured layer between portions of the bag and the cavity which serves to provide some resistance to separation of the element comprising the bag and the foamed mass from the cavity wall. The bag is preferably chosen so that it has a perimeter not smaller than the perimeter of a cross section of the cavity to be filled. Materials suitable for providing the bag are those which do not deleteriously influence the curable composition, and which are able to provide bag walls which are sufficiently cohesive to hold the composition when liquid and as it foams and are flexible enough to allow the bag to be opened out by pressure from the foaming mass and urged into conformity with the cavity wall. The bag may be of a material which is elastic, inelastic or capable of being enlarged under the influence of the foaming composition but should not act to substantially reduce the volume of the foam after the foam has cured to the shape of the cavity. Suitable materials include flexible plastics materials for example polyethylene and cellophane. Particularly suitable are bags formed from a tubular extrusion of polyethylene having a thickness of from about 0.003mm to about 0.017mm, more preferably $6.5 \times 10^{-3}$ to $1.5 \times 10^{-2}$mm.

The perforations in the bag should be spaced sufficiently from the closed, lower end of the bag so that when the surface of the foaming liquid reaches up to the perforations the curing reaction of the composition has proceeded to a stage where the composition is no longer a freely flowing liquid but rather a somewhat viscous slowly flowing material which is nevertheless capable of passing through the perforations to fill narrow crevices. The perforations are conveniently formed by punching holes in the bag before it is inserted in the cavity. The holes should be of sufficient size and disposition to permit passage of required amounts of the curing composition through them. We have found that a pattern of holes of about 3 to 8mm diameter spaced not less than one inch apart is satisfactory when positioned at a level in the bag which is reached by the curing composition when it has a viscosity of from about $5 \times 10^{-3}$ to about $10^{-2}$ $m^2/s$.

In a method according to the present invention, a liquid, foam forming, curable composition is used. The composition chosen is one which is curable at ambient temperature, i.e. the temperature in the hollow section at the time of installation, which may be in the range from about 15°C to about 30°C for example. Materials which require significant application of heat in order to effect cure in an acceptable period of time impose additional limitations on various aspects of the method, including the choice of a suitably heat resistant material for the bag.

Room temperature curable compositions which foam by virtue of in situ production of gases during curing are particularly preferred. Room temperature vulcanisable silicone foam compositions are preferred, especially those which comprise a polysiloxane having alkylhydrogen siloxane units and a hydroxylated material so that the composition is curable to form a polysiloxane matrix which is foamed by evolution of hydrogen gas in presence of a suitable catalyst according to the scheme $\equiv SiH + HOQ \rightarrow \equiv SiOQ + H_2$ as is known in the art. For example curable, foam forming silicone compositions are disclosed in G.B. Patent Specifications 798 669. 867 619 and 1 522 637. Various catalysts may be used in a composition employed in a method according to the invention. For example a tin salt of a carboxylic acid as referred to in G.B. Patent Specification 798 669 or a platinum catalyst as referred to in G.B. Patent Specification 1 522 637.

Tin salts suitable for use in the invention include tin salts of carboxylic acids and particularly the stannous salts of the more commonly available carboxylic acids. Examples of suitable materials are dibutyl tin dilaurate, stannous acetate, stannous napthenate, stannous benzoate, stannous sebacate, stannous succinate and stannous octoate. Platinum catalysts may take any of the known forms, ranging from platinum as deposited on carriers such as silica gel or powdered charcoal, to platinic chloride, salts of platinum and chloroplatinic acids either as the hexahydrate or the anhydrous form and platinum complexes e.g. those prepared from chloroplatinic acid hexahydrate and divinyl tetramethyldisiloxane.

Hydrogen gas generated during the reaction causes foaming and expansion of the composition as it cures, resulting in an outward pressure from the composition exerted upon the bag. If desired, foaming of the composition and thus the pressure to expand the bag may be augmented for example by use of additional foaming agent for example compressed air, nitrogen or the liquefied gases known for use in aerosols, including hydrocarbons, for example methane, ethylene, ethane, propane, neopentane and the many fluorinated hydrocarbons for example methyl fluoride, trifluoromethane, monochlorodifluoromethane and dichlorodifluoromethane. The hydroxylated material (HOQ) may be an organic material or a silicon compound and preferably comprises two or more hydroxyl groups per molecule in order to provide a

suitable elastomeric foam mass. Preferably the hydroxylated material comprises a polysiloxane having silicon-bonded hydroxyl groups. If desired one may also include in the composition a polysiloxane having alkenyl e.g. vinyl groups, which is particularly beneficial if a platinum catalyst is employed e.g. for the addition reaction between the alkylhydrogensiloxane and alkenyl groups, due to flame retardant properties conferred by the platinum compound.

Suitable polysiloxanes having alkylhydrogensiloxane units include polymers having units according to the general formula

$$R_pHSiO_{\left(\frac{3-p}{2}\right)}$$

in which each R represents a lower alkyl or phenyl group e.g. a methyl group, and p is 1 or 2. The alkylhydrogen polysiloxanes may also comprise units

$$R_nSiO_{\frac{4-n}{2}}$$

in which R is as referred to above and n is 1, 2 or 3. Curing reactions of the preferred compositions are dependant on presence of appropriate proportions of the interactive silicon substituents and the alkylhydrogen polysiloxane is selected accordingly. We prefer that each R represents a methyl group. Preferably terminal groups of the alkylhydrogen polysiloxane have the formula $R_3SiO_{\frac{1}{2}}$ where each R represents a methyl group. Suitable alkylhydrogen polysiloxanes include those comprising MeHSiO units with or without the presence of $Me_2SiO$ units and having viscosities of the order of from about $10^{-6}$ to about $10^{-4}$ $m^2/s$ more preferably from about $10^{-6}$ to about $5 \times 10^{-5}$ $m^2/s$.

Suitable polysiloxanes having silicon-bonded hydroxyl or alkenyl groups include polymers which include units according to the general formula

$$R'_m(Q)SiO_{\frac{3-m}{2}}$$

in which each Q represents an OH group or an alkenyl group having 2 to 4 carbon atoms inclusive. for example a $-CH=CH_2$ or a $-CH_2-CH=CH_2$ group, each R represents a lower alkyl or phenyl radical e.g. a methyl radical and m is 1 or 2. These polysiloxanes also comprise units

$$R_nSiO_{\frac{4-n}{2}}$$

in which R and n are as referred to above. These materials are preferably liquids and are chosen so that their functionality is appropriate in relation to the degree of chain extension and crosslinking required during curing of the composition. The polysiloxanes having silicon-bonded hydroxyl groups are preferably silanol terminated polydiorganosiloxanes according to the general formula

$$HO-\left[\begin{matrix}R\\ |\\ SiO\\ |\\ R\end{matrix}\right]_n-H$$

in which each R represents a methyl group and n has a value such that the polysiloxane has a viscosity of about $5 \times 10^{-4}$ to $2.5 \times 10^{-2}$ $m^2/s$ i.e. a number of average molecular weight of the order of about 20,000 to about 80,000.

Preferred materials have viscosities of the order of about 1.5 x $10^{-3}$ to about 1.5 x $10^{-2}$ $m^2/s$ and comprise, per molecule, primarily units according to the general formula $R_2SiO$ and two units according to the general formula $R_2(OH)SiO_{\frac{1}{2}}$. Preferred polysiloxanes having silicon-bonded alkenyl groups include those in which the alkenyl groups provide less than about 5% of the total silicon-bonded organic groups of the polymer. The alkenyl groups may be attached to terminal silicon atoms of the polysiloxane chain or to silicon atoms along the chain or both. Suitable alkenyl polysiloxanes include dimethylvinyl end blocked polysiloxanes for example those having viscosities up to about 8.5 x $10^{-2}$ $m^2/s$ and phenylmethylvinyl end blocked polydimethylsiloxanes for example those having viscosities of about 2.5 x $10^{-4}$ to about $10^{-2}$ $m^2/s$. In the preferred materials, each R represents a methyl radical. In preferred compositions according to the invention, the preferred hydroxy and alkenyl functional polysiloxanes thus provide polysiloxane chains of significant length and this is desirable in view of flexibility and elastomeric properties required of the product resulting from curing of the composition. If desired, comparatively low molecular weight, i.e. short chained, organodifunctional polysiloxanes may also be included in the composition. Suitable materials include α,ω, dihydroxy polydimethylsiloxanes having up to twenty five dimethylsiloxane units in the molecular chain.

One may also include in the composition appropriate quantities of higher functional materials as crosslinking agents. Suitable crosslinking agents include materials having three or more functional e.g. hydroxyl groups per molecule. Preferred crosslinking agents include an alkoxysilane and/or a condensation product thereof and silicates capable of combining with three or more hydroxy polysiloxane molecules with release of the corresponding alcohol of the alkyl radicals, e.g. methyl trimethoxysilane, n-propylorthosilicate and ethyl polysilicate.

Compositions for use in the invention preferably include monofunctional hydroxy silicon compounds effective as chain terminators. Such materials influence the structure of foams formed by use of the composition and their use is highly preferred where predominantly open-celled foams are desired. Suitable monofunctional hydroxy compounds include triorganosilanols and organosiloxanols which may be for example short chain siloxanes having for example up to about 25 siloxane units per molecule and having a terminal or pendant hydroxyl group, or a material of the general formula $R_3SiOH$ where each R may be for example a lower alkyl group e.g. a methyl group or a phenyl group. Examples of such materials include $HO(CH_3)_2Si(OSi(CH_3)_2)_3CH_3$ (nonamethyltetrasiloxan-1-ol)

$$(CH_3)_3Si\text{-}O\text{-}\underset{\displaystyle OH}{\overset{\displaystyle CH_3}{\underset{|}{\overset{|}{Si}}}}\text{-}O\text{-}Si(CH_3)_3$$

(heptamethyltrisiloxan-2-ol) and $CH_3(C_6H_5)_2SiOH$ (diphenylmethylsilanol)

Preferably fillers are incorporated in compositions used in the invention. Any desired filler may be employed for example metal oxides, clays, fume silicas, hydrophobic silicas e.g. those prepared by treatment of finely divided silica with organochlorosilanes, organosiloxanes, organosilazanes or alkylsilanols and powdered glass.

Other ingredients may be included in the composition for example extenders, surfactants and pore size regulating agents, for example fluorine containing polysiloxanes.

Advantages which flow from use of the invention stem primarily from the control of flow of the composition as it cures to a self supporting condition, from the close conformity between the element comprising the bag and the foamed mass and the cavity in the hollow section and from a measure of adherence between the element comprising the bag and the foamed mass and walls of the cavity arising from the presence of the cured composition between the outer surface of the bag and the cavity wall. Thus one may, for example, apply a prescribed quantity of composition to a heightwise extending hollow section without substantial wastage of composition flowing from the section before it cures. One may disregard the possibility of inhibiting the cure of the composition and other deleterious effects which may be caused by materials of or on the hollow section. Equally, one may employ a composition which, in the absence of the bag, might bring about unwanted effects on the hollow section or its other contents. Furthermore one may achieve repetitively uniform filling of cavities in hollow sections with minimal operator attention after introduction of the bag and the liquid composition to the cavity.

A method according to the invention may be employed for the partial or complete filling of cavities in hollow sections of various sizes and dispositions for example hollow sections of vehicle bodies. It is principally intended for use in the filling or blocking of hollow sections of vehicles for sound deadening

purposes and for restriction of ingress of unwanted materials during use of the vehicle and is particularly of value in the sound deadening of cars and vans which have substantial lengths of open-ended tubular sections. It is of value primarily in those situations where it is important to minimise wastage of material from heightwise extending hollow sections or to ensure satisfactory results without prolonged attention by operatives. Thus it is envisaged as of particular value in the manufacture of vehicles on a production line basis, for example in the treatment of door pillars, "A posts" and the like. When using a method according to the invention to block a cavity in a widthwise extending hollow section the bag may be selected to restrict outward flow of the composition whilst permitting heightwise expansion of the foaming composition to urge the bag into conformity with the downward facing interior of the cavity. When using a method according to the invention to block a cavity in a heightwise extending hollow section the bag may be selected to restrict downward flow of the composition whilst permitting widthwise expansion of the foaming mass to urge the bag into conformity with the interior of the cavity.

In order that the invention may become more clear, there now follows a description of example methods according to the invention and illustrative thereof.

In the example methods a liquid, foam forming, curable composition based on silicone materials was used. The composition was a room temperature curable silicone composition formed by mixing about seven parts by weight of a catalyst (stannous octoate) with 100 parts by weight of a component comprising

| Material | Parts by Weight |
|---|---|
| α,ω, hydroxypolydimethylsiloxane MW about 21,000 (viscosity about $2 \times 10^{-3}$ m²/s) | 100 |
| α,ω, hydroxypolydimethylsiloxane MW about 900 (viscosity about $4.2 \times 10^{-5}$ m²/s) | 10 |
| Diphenylmethylsilanol | 10 |
| Trimethylsiloxy endblocked methyl-hydrogensiloxane, (viscosity about $3 \times 10^{-5}$ m²/s) | 10 |
| Finely divided filler | 25 |
| n-propylorthosilicate | 4 |

When mixed and allowed to foam freely. the composition foamed and cured at room temperature to provide a low density (about 120 to 200 kg/m³) foam having for example good sound insulation properties.

## Example 1

Bags having a width of 200mm and a length of 350mm of polyethylene film having uniform thicknesses $7.0 \times 10^{-3}$ and $1.2 \times 10^{-2}$mm respectively were provided with similar sets of perforations. The perforations consisted of holes 6mm in diameter spaced one per 12.7mm distance around the perimeter of the bags, i.e. two holes per inch. The holes were located 100mm from the closed ends of the bags in the direction of the open mouths of the bags. Each bag was placed in a 155mm length of rectangular section (47mm x 70mm) Perspex tube with the length of the tube extending heightwise and the closed end of the bag near to the lower end of the tube. The perforations were located towards the upper end of the tube.

Charges formed by mixing 100g of the component with 7g of the catalyst were placed in each of the bags and the compositions allowed to foam freely at room temperature (20°C). In each bag, the upper surface of the composition initially was about 45mm above the base of the bag. During a period of several minutes the composition foamed and increased in viscosity from about $3 \times 10^{-3}$ m²/s (3000 cP) initially to about $7 \times 10^{-3}$ m²/s (7000 cP) at the time its surface had risen to the level of the perforations and finally

became cured. As the foam rose in its bag, the bag was urged into conformity with the shape of its supporting tube and the curing mixture rose to about 90mm above the base of the bag. As the upper surface came level with the perforations, some of the foam oozed through the perforations, into intimate contact with the inner surface of the tube and filled crevices formed between the tube surface and creases in the bag wall. When the foamed compositions had become fully cured the whole cross section of each Perspex tube had become completely blocked by the foam/bag element and it was not possible to remove the foam/bag elements from their tubes without tearing the foams.

Example 2

A bag having a width of 200mm and a length of 300mm of polyethylene film having a thickness of 6.5 microns was provided with perforations. The perforations consisted of holes 6.00mm in diameter spaced one per 12.7mm distance around the perimeter of the bag, i.e. two holes per inch. The holes were located 100mm from the closed end of the bag in the direction of the open mouth of the bag. The bag was inserted in a cavity in a somewhat tapered, square section, cavity. The cavity was provided in a member formed from two parallel plates of Perspex having two mutually inclined Perspex plates secured between them to described an angle of about 20°C. The tapered section cavity so defined had a volume of about 500ml. The member was placed with the larger opening of the cavity facing downwards. The bag was hung in the cavity with its mouth at the higher end of the cavity and a charge of 100g of the component mixed with 7g of the catalyst was introduced to the bag. The mixture foamed, urging the bag into conformity with the walls of the cavity and as the curing composition rose in the bag to the level of the perforations, curing composition oozed through the perforations into contact with the walls of the cavity. When the foaming composition had become fully cured the cross section of the member had become fully blocked by the foam/bag element which remained in position. It was not possible to remove the foam/bag element from the cavity without damaging the foam.

## Claims

1. A method of providing a foamed mass within a cavity in a hollow section comprising the steps of introducing to the cavity a bag of flexible material and introducing into the bag a liquid, curable, foam forming composition, the bag being of a flexible material and having at least a portion which is at least substantially impervious to the liquid foam forming composition and outlet openings which are reached by foam forming composition introduced to the impervious portion of the bag as the composition foams so that the foaming composition may penetrate the outlet openings prior to completion of curing of the composition.

2. A method according to Claim 1 wherein the bag is of polyethylene film having a thickness of 0.003mm to 0.017mm.

3. A method according to Claim 1 wherein the liquid, curable, foam forming composition comprises a room temperature vulcanisable silicone foam composition.

4. A method according to Claim 3 wherein the composition comprises a polysiloxane having alkylhydrogen siloxane units, a hydroxylated material and a catalyst.

5. A method according to Claim 4 wherein the hydroxylated material comprises a polysiloxane having silicon-bonded hydroxyl groups.

6. A method according to Claim 5 wherein the composition also comprises a polysiloxane having alkenyl groups.

7. A method according to any one of the preceding claims wherein the hollow section is a portion of a motor vehicle body.

8. A hollow section containing a foamed mass produced by a method according to any one of Claims 1 to 6.

9. A vehicle body having a hollow section according to Claim 8.